# EUROPÄISCHE PATENTSCHRIFT

(11) **EP 3 544 132 B1**
(45) Veröffentlichungstag und Bekanntmachung des Hinweises auf die Patenterteilung: **04.08.2021**
(21) Anmeldenummer: 18305326.3
(22) Anmeldetag: 23.03.2018
(51) Int. Cl.: H02G 3/06, H02G 3/22, F16L 5/02

(54) **AXIAL FIXIERBARE DICHTUNGSANORDNUNG FÜR EINE KABELDURCHFÜHRUNG**
AXIALLY FIXABLE SEALING ASSEMBLY FOR A CABLE FEEDTHROUGH
DISPOSITIF D'ÉTANCHÉITÉ AXIAL POUVANT ÊTRE FIXÉ POUR UN PASSAGE DES CÂBLES

(43) Veröffentlichungstag der Anmeldung: 25.09.2019
(73) Patentinhaber: Nexans, 92400 Courbevoie (FR)
(72) Erfinder: KROOP, Tobias, 92715 PÜCHERSREUTH (DE); BRUNNER, Daniel, 92249 VILSECK (DE); HUSCHER, Rainer, 95679 WALDERSHOF (DE)
(74) Vertreter: Ipsilon

(56) Entgegenhaltungen:
- DE-U1-202013 003 600
- FR-A- 1 282 648

## Beschreibung

### Gebiet

Die Erfindung betrifft eine Dichtungsanordnung für ein in ein Gehäuse eingeführtes Kabel.

### Hintergrund

Elektrische Komponenten und Vorrichtungen sind häufig in geschlossenen Gehäusen angeordnet, z. B. um sie vor Umwelteinflüssen wie Staub, Flüssigkeiten oder Gasen zu schützen, die deren Funktion oder Lebensdauer beeinträchtigen könnten, oder zum Schutz vor unbeabsichtigter Berührung. In der Regel müssen die elektrischen Komponenten und Vorrichtungen über Leitungen mit elektrischer Energie versorgt werden, außerdem können Leitungen für Sensoren, Steuer- oder Datensignale zu den Komponenten und Vorrichtungen hinführen oder von diesen wegführen. Diese Leitungen oder Kabel müssen durch entsprechende Öffnungen im Gehäuse geführt werden, welche auch als Kabeldurchführungen bezeichnet werden. Die Kabeldurchführungen können bspw. als Bohrungen oder Ausstanzungen in einer Gehäusewand ausgeführt sein, welche einen größeren Durchmesser als der äußere Durchmesser eines Kabelmantels aufweisen, um das Einführen der Kabel zu erleichtern, welche unter Umständen außerdem einen Stecker oder anderen Anschluss an dem in das Gehäuse eingeführten Ende aufweisen können.

Um die Dichtigkeit des Gehäuses wieder herzustellen müssen die Kabeldurchführungen mittels entsprechender Dichtmittel wieder verschlossen werden. Außerdem kann ein mechanischer Schutz des Kabels im Bereich der Kabeldurchführung gegen Scheuern oder Biegen mit unzulässig kleinen Biegeradien erwünscht sein. Darüber hinaus kann eine Fixierung des in das Gehäuse geführten Kabels gegen Verschiebung in axialer Richtung erforderlich sein.

Eine aus dem Stand der Technik bekannte Dichtungsanordnung für eine Kabeldurchführung weist zwei Teile auf, welche von beiden Seiten einer Kabeldurchführung eines Gehäuses auf das durch die Kabeldurchführung geführte Kabel geschoben werden und dann miteinander lösbar oder unlösbar verbunden werden. Die Verbindung kann eine Schraub- oder Klemmverbindung umfassen und zusätzlich durch Kleben oder dergleichen gegen unbeabsichtigtes Lösen gesichert sein. Die Abdichtung des Innenraums des Gehäuses gegen das Eindringen von Festkörpern und Fluiden erfolgt dabei üblicherweise an zwei Stellen. Eine erste Dichtung ist zwischen Kabelmantel und Dichtungsanordnung vorgesehen, eine zweite Dichtung ist zwischen mindestens einem der beiden verbundenen Teile der Dichtungsanordnung und der Gehäusewand vorgesehen. Dadurch ergeben sich zwei Stellen, an denen die Dichtung versagen kann. Eine solche Dichtungsanordnung ist bspw. aus der DE3604213A1 bekannt.

Die DE3604213A1 zeigt eine zweiteilige Dichtungsanordnung, bei der eine Mutter auf ein Durchführungsteil geschraubt wird, wodurch Klemmzungen gegen den Kabelmantel gedrückt werden und dadurch das Kabel fixieren. Die Dichtung der Dichtungsanordnung gegen das Gehäuse wird durch die axial in Kabelrichtung beidseitig gegen die Gehäusewand drückenden Teile der Dichtungsanordnung bewirkt. Hierzu müssen die beiden miteinander verbundenen Teile einen Durchmesser aufweisen, welcher erheblich größer ist als das Loch der Kabeldurchführung. Außerdem muss die Länge des Durchführungsteils größer als die Wanddicke des Gehäuses sein, darf aber nicht zu groß sein, weil sonst die Mutter den konischen Teil, mit dem die Klemmzungen gegen den Kabelmantel gedrückt werden, vollständig zusammendrückt, ohne dass die axiale Dichtwirkung erzielt wird. Zudem ist es bei dieser Art Dichtungsanordnung erforderlich, dass der Montageort von beiden Seiten zugänglich ist.

Die DE7729783U1 zeigt eine ähnliche Konstruktion, aber mit einem in dem Klemmbereich liegenden weichen Dichtungsteil, das beim Zusammenschrauben der beiden Teile der Dichtungsvorrichtung durch den konischen Teil der Mutter gegen den Kabelmantel gedrückt wird.

Die DE19848216A1 zeigt ebenfalls eine ähnliche Konstruktion, wobei ein ringförmiges Weichteil in der Mutter angeordnet ist, welches beim Zusammenschrauben mit dem Dichtungskörper durch einen konischen Teil desselben gegen den Kabelmantel gedrückt wird.

Die FR1282648A zeigt eine zweiteilige Dichtungsanordnung mit einem ersten Dichtungsteil, welches durch ein Loch in einem Gehäuse durchgeführt und dort verrastet wird, und einem zweiten Dichtungsteil, welches in das erste Dichtungsteil eingeschraubt wird, wobei ein konisches Teil mit einem entsprechenden Innenkonus des ersten Dichtungsteils zusammenwirkt und das erste Dichtungsteil im Bereich der Durchführung radial nach außen drückt. Gleichzeitig wird das Kabel durch das konische Teil fixiert. Bei dieser Dichtungsanordnung müssen die Materialien des ersten und des zweiten Dichtungsteils jeweils eine gewisse Mindesthärte aufweisen, um miteinander verschraubbar zu sein. Gleichzeitig ist eine gewisse Elastizität erforderlich, damit eine ausreichende Dichtwirkung erzielt wird. Zudem erfordert die Verrastung in der Kabeldurchführung eine an die Wanddicke angepasste Konstruktion, so dass für unterschiedliche Wanddicken und für unterschiedliche Kabeldurchmesser eine entsprechende Vielzahl an angepassten Dichtungsanordnungen bereitgehalten werden muss.

Die US3548079 zeigt eine zweiteilige Kabeldurchführung mit einem Dichtungskörper und einer Mutter, wobei die Mutter bei Verschraubung mit dem Dichtungskörper einen konischen Teil desselben gegen den Kabelmantel drückt. Die Dichtung gegenüber der Gehäusewand erfolgt durch einen Rastbereich des Dichtungskörpers sowie eine durch die Mutter auf diesen radial und axial wirkende Kraft. Auch bei dieser bekannten Dichtungsanordnung ist eine gewisse Mindesthärte der beiden Teile erforderlich, damit diese miteinander verschraubbar sind. Ebenfalls ist wegen der axialen Klemmung für unterschiedliche Wandstärken und außerdem für unterschiedliche Kabeldurchmesser die Bereitstellung einer entsprechenden Vielzahl an angepassten Dichtungsanordnungen erforderlich.

Die DE 20 2013 003 600 U1 zeigt eine Dichtungsanordnung mit einem Stutzen mit Klemmelementen und einer darauf aufschraubbaren Mutter, welche die Klemmelemente radial nach innen gegen ein in der Dichtungsanordnung aufgenommenes Kabel drückt und dadurch eine axiale Fixierung der Dichtungsanordnung auf dem Kabel bewirkt. Zwischen den Klemmelementen und dem Kabel ist ein schlauchförmiges Dichtungselement vorgesehen, welches von den Klemmelementen gegen das Kabel gedrückt wird.

Wenngleich einige dieser bekannten Dichtungsanordnungen die Dichtung zwischen Kabel und Dichtungsanordnung sowie zwischen Dichtungsanordnung und Gehäuse mittels eines einzigen Dichtkörpers erzielen, so sind diese in der Regel sehr voluminös, weil eine ausreichende Abstützung der beiden miteinander verbundenen Teile gegen die Gehäusewand erreicht werden muss.

Außerdem ist bei den bekannten Dichtungsanordnungen das vollständige Vormontieren und Fixieren der Dichtungsanordnung auf dem Kabel bereits vor der Montage nicht möglich. Ein derartiges Vormontieren bringt den Vorteil mit sich, dass in das Gehäuse eingeführte, vorkonfektionierte Kabel mit an korrekter Stelle auf dem Kabel platzierter Dichtungsanordnung im in der Gehäusedurchführung montierten Zustand innerhalb wie außerhalb des Gehäuses genau die richtige Länge aufweisen, um mit Komponenten, Bauteilen oder Baugruppen verbunden werden zu können. Es entfällt also das möglicherweise vor der endgültigen Befestigung der Dichtungsanordnung erforderliche Bewegen des Kabels, um die Anschlüsse herzustellen, wodurch auch das endgültige Befestigen der Dichtungsanordnung nicht vergessen werden kann.

Hiervon ausgehend hat die vorliegende Erfindung die Aufgabe, eine Kabel-Dichtungsanordnung zu schaffen, welche eines oder mehrere der eingangs genannten Probleme überwindet oder zumindest verringert.

### Zusammenfassung der Erfindung

Zur Lösung dieser Aufgabe schlägt die Erfindung eine auf ein Kabel aufschiebbare, an dem Kabel axial fixierbare Dichtungsanordnung zur Montage in einer Kabeldurchführung eines Gehäuses gemäß Anspruch 1.

Mit dem Klemmkörper ist ein Dichtungsteil so verbunden, dass dieser zumindest im montierten Zustand der Dichtungsanordnung nicht oder zumindest nur unter großem Kraftaufwand von dem Klemmkörper lösbar ist. Die Verbindung kann eine kraft- und/oder formschlüssige Verbindung von Klemmkörper und Dichtungsteil umfassen, aber auch eine alternative oder zusätzliche stoffschlüssige Verbindung ist möglich, bspw. durch Anspritzen, Angießen, Verschweißen oder Kleben. Das Dichtungsteil ist vorzugsweise aus einem elastisch verformbaren ersten Material gefertigt, und der Klemmkörper ist aus einem zweiten elastisch verformbaren Material gefertigt. Das zweite Material kann eine größere Steifigkeit bzw. geringere Elastizität und/oder eine größere Härte aufweisen als das erste Material. Bei einer Variante sind Klemmkörper und Dichtungsanordnung ein einziges Teil, das aus einem Material mit einer geeigneten Elastizität und/oder Härte hergestellt ist.

Zur Fixierung der Dichtungsanordnung auf dem Kabel wird der Klemmring axial über einen Teil des Klemmkörpers geschoben. Der Klemmring kann im montierten Zustand lösbar oder unlösbar fixiert sein, bspw. durch eine formschlüssige Verbindung mit einer entsprechenden Struktur des Klemmkörpers oder durch eine Klebeverbindung.

Der Klemmkörper kann entlang eines Umfangs Klemmzungen oder Klemmfinger aufweisen, die durch den Klemmring radial aufeinander zu bewegt werden können. Die Klemmzungen oder Klemmfinger können außerdem zum Kabel weisende Strukturen aufweisen, welche bei aufgeschobenem Klemmring einen Mantel eines in die Dichtungsanordnung eingeführten Kabels lokal verformen und so eine formschlüssige Verbindung herstellen oder zumindest lokale Kraftspitzen erzeugen, die ein axiales Verschieben der Dichtungsanordnung verhindern oder erschweren. Diese Strukturen umfassen bspw. Stege, Zähne, Noppen oder Rillen.

Bei einer Ausführung ist der Klemmring in einer montierten Position mit dem Klemmkörper formschlüssig so verbunden, dass der Klemmring nur unter Aufbringen einer vorbestimmten Mindestkraft lösbar ist.

Bei einer Ausführung weist der Klemmring einen äußeren Durchmesser auf, welcher größer ist als eine Kabeldurchführung in ein Gehäuse. Eine axial auf das Kabel mit der Dichtungsanordnung wirkende Kraft, welche entgegen der Aufschieberichtung auf den Klemmring wirkt, bewirkt eine zunehmende Klemmwirkung der Klemmfinger oder Klemmzungen. Bei Überschreiten einer vorbestimmten Kraft kann der Klemmring sich aus der Montageposition lösen und es kann eine Verringerung der Klemmwirkung der Klemmfinger oder Klemmzungen eintreten, oder die Klemmwirkung wird aufgehoben.

Diese Ausführung kann vorteilhaft sein, wenn eine axiale mechanische Zugbelastung in eine Richtung erwartet wird. In diesem Fall kann der Klemmring gegen ein Durchziehen des Kabels mit der Dichtungsanordnung durch die Kabeldurchführung sperren. Bei Überschreiten der vorbestimmten Kraft löst sich der Klemmring von den Klemmzungen oder Klemmfingern und gibt das Kabel frei. Das Kabel kann nun in der Dichtungsanordnung axial bewegt werden. Bei einer hinreichend großen axialen Bewegung des Kabels kann sich bspw. ein Steckverbinder aus einer Buchse lösen, wodurch die Gefahr des Reißens des Kabels verringert ist.

Bei dieser Ausführung kann der Klemmring aber auch so montiert sein, dass eine axiale mechanische Zugbelastung eine Verstärkung der Klemmwirkung bewirkt.

Im montierten Zustand ist das in eine Kabeldurchführung eines Gehäuses eingesetzte Dichtungsteil in einer Ebene radial gegen das Kabel und gegen die Kabeldurchführung wirkenden Kräften ausgesetzt. Die radial wirkenden Kräfte werden durch die Komprimierung zumindest von denjenigen Teilen des elastischen Dichtungsteils erzeugt, welche einen größeren Durchmesser als die Kabeldurchführung aufweisen und sich innerhalb der Kabeldurchführung befinden. Das elastische Dichtungsteil bewirkt so eine umlaufend radiale Dichtung gegen den Kabelmantel und die Kabeldurchführung. Unebenheiten der Oberfläche der Kabeldurchführung und/oder des Kabels werden durch das elastische Dichtungsteil ausgeglichen.

Das Dichtungsteil kann auf einer zum Kabel weisenden Oberfläche und/oder einer zur Kabeldurchführung weisenden Oberfläche jeweils eine oder mehrere entlang eines Umfangs umlaufende Rillen oder Stege aufweisen. Diese können leichter verformbar sein und können sich Unebenheiten der Oberfläche der Kabeldurchführung und/oder des Kabelmantels noch besser anpassen als ein Dichtungsteil mit einer im Bereich der Dichtflächen glatten Oberfläche. Wenn mehrere umlaufende Rillen oder Stege vorhanden sind bilden diese mehrere hintereinander liegende Dichtungen. Wenn die Kabeldurchführung entlang ihres inneren Umfangs ebenfalls umlaufende Rillen oder Stege aufweist kann durch ineinandergreifende Rillen bzw. Stege von Dichtungsteil bzw. Kabeldurchführung eine Sicherung der Dichtungsanordnung gegen axiales Verschieben erzielt werden. Außerdem vergrößert sich die für die Dichtung zur Verfügung stehende Fläche.

Bei einem Ausführungsbeispiel weist das Dichtungsteil eine axiale Länge auf, welche größer ist als eine Wanddicke eines Gehäuses, in das das Dichtungsteil eingesetzt ist. Die außerhalb der Wand mit der Kabeldurchführung befindlichen Bereiche des Dichtungsteils werden dabei nicht komprimiert und bewirken eine zusätzliche Sperre gegen eine axiale Verschiebung der montierten Dichtungsanordnung.

Bei einem Ausführungsbeispiel ist an axial gegenüberliegenden Enden des Klemmkörpers jeweils ein Dichtungsteil vorgesehen, und mindestens ein Klemmring ist zwischen den Dichtungsteilen verschieblich gelagert. Die Dichtungsteile weisen einen Abstand voneinander auf, der im Wesentlichen einer Wanddicke der Kabeldurchführung entspricht. Im montierten Zustand sind dadurch beide Seiten der Kabeldurchführung gegen das Eindringen von Fluiden oder Festkörpern abgedichtet.

Bei der Montage eines Kabels in eine Kabeldurchführung eines Gehäuses werden zunächst der Klemmkörper mit dem Dichtungsteil und der Klemmring auf das Kabel aufgeschoben und an eine gewünschte Position gebracht. Das Aufschieben erfolgt im Wesentlichen ohne radial wirkende Kräfte, so dass die für das axiale Aufschieben erforderliche Kraft klein ist. Ein Ende des Kabels kann dabei bereits durch die Kabeldurchführung in das Gehäuse eingeführt sein. Auf den an der gewünschten Position auf dem Kabel positionierten Klemmkörper wird der Klemmring geschoben, wodurch die Dichtungsanordnung auf dem Kabel fixiert wird. Die Dichtungsanordnung mit dem Kabel wird nun in die Kabeldurchführung eingeführt und so positioniert, dass das Dichtungsteil in der Kabeldurchführung zu liegen kommt. Dabei wird das Dichtungsteil komprimiert. Da die Dichtungsanordnung einen größeren Querschnitt aufweist als die Kabeldurchführung drückt das Dichtungsteil in radialer Richtung umlaufend gegen das Kabel und die Kabeldurchführung, so dass die Kabeldurchführung gegen das Eindringen von Fluiden und Festkörpern abgedichtet ist. Außerdem bewirkt die radial wirkende Kraft eine Fixierung der Dichtungsanordnung in der Kabeldurchführung. Eine zusätzliche Sicherung gegen axiales Verschieben kann vorgesehen sein, wenn die Klemmwirkung des Dichtungsteils in der Kabeldurchführung nicht ausreicht.

### Kurze Beschreibung der Zeichnung

Nachfolgend wird die Erfindung anhand einer Ausführungsform unter Bezugnahme auf die begleitenden Figuren exemplarisch näher erläutert. Alle Figuren sind rein schematisch und nicht maßstäblich. Es zeigen:
- Fig. 1: eine schematische Schnittdarstellung einer ersten erfindungsgemäßen exemplarischen Dichtungsanordnung in einer nicht auf einem Kabel fixierten Lage,
- Fig. 2: eine schematische Schnittdarstellung der ersten erfindungsgemäßen exemplarischen Dichtungsanordnung in einer auf dem Kabel fixierten Lage,
- Fig. 3: eine schematische Schnittdarstellung der auf dem Kabel fixierten ersten erfindungsgemäßen exemplarischen Dichtungsanordnung nach Montage in einer Kabeldurchführung,
- Fig. 4: eine schematische Schnittdarstellung der auf dem Kabel fixierten ersten erfindungsgemäßen exemplarischen Dichtungsanordnung nach Montage in einer Kabeldurchführung mit geringer Wanddicke,
- Fig. 5: eine schematische Schnittdarstellung einer auf einem Kabel fixierten zweiten erfindungsgemäßen exemplarischen Dichtungsanordnung nach Montage in einer Kabeldurchführung,
- Fig. 6: eine schematische Schnittdarstellung der auf dem Kabel fixierten zweiten erfindungsgemäßen exemplarischen Dichtungsanordnung nach Montage in einer Kabeldurchführung bei Einwirken einer Kraft in eine axiale Richtung,
- Fig. 7: eine schematische Schnittdarstellung einer dritten erfindungsgemäßen exemplarischen Dichtungsanordnung in einer nicht auf einem Kabel fixierten Lage,
- Fig. 8: eine schematische Schnittdarstellung der auf dem Kabel fixierten dritten erfindungsgemäßen exemplarischen Dichtungsanordnung nach Montage in einer Kabeldurchführung,
- Fig. 9: eine perspektivische Ansicht eines Teils der ersten erfindungsgemäßen exemplarischen Dichtungsanordnung in einer nicht auf einem Kabel fixierten Lage,
- Fig. 10: eine perspektivische Ansicht der ersten erfindungsgemäßen exemplarischen Dichtungsanordnung in einer auf dem Kabel fixierten Lage, und
- Fig. 11: eine perspektivische Ansicht der ersten erfindungsgemäßen exemplarischen Dichtungsanordnung in einer nicht auf einem Kabel fixierten Lage nach Montage in einer Kabeldurchführung.

### Ausführunasbeispiel

Gleiche oder ähnliche Elemente sind in den Figuren mit gleichen oder ähnlichen Bezugszeichen versehen.

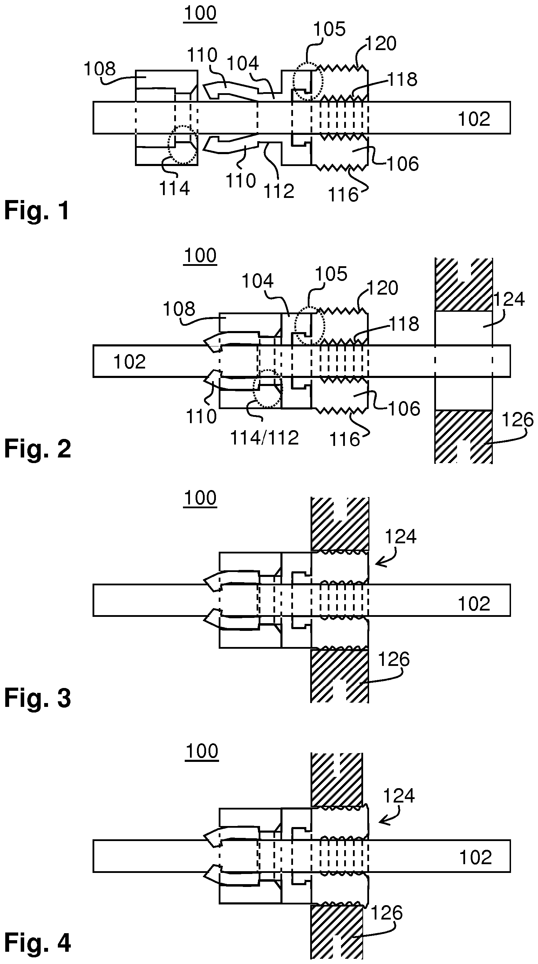

Figur 1 zeigt eine schematische Schnittdarstellung einer ersten erfindungsgemäßen exemplarischen Dichtungsanordnung 100 in einer nicht auf einem Kabel 102 fixierten Lage. Die Dichtungsanordnung umfasst einen Klemmkörper 104, mit welchem ein Dichtungsteil 106 verbunden ist. In dem in der Figur gezeigten exemplarischen Beispiel sind Dichtungsteil 106 und Klemmkörper 104 mittels einer formschlüssigen Verbindung 105 verbunden, hervorgehoben durch die gepunktete Ellipse. Andere Verbindungsarten wie Kleben, Schweißen, etc. oder Kombinationen unterschiedlicher Verbindungsarten sind ebenso denkbar. Die Dichtungsanordnung umfasst außerdem einen Klemmring 108. Klemmkörper 104 mit Dichtungsteil 106 sowie Klemmring 108 sind auf dem Kabel 102 in axialer Richtung beweglich und können so an eine gewünschte Position auf dem Kabel 102 gebracht werden. Der Klemmkörper 104 weist Klemmfinger oder Klemmzungen 110 auf, welche flexibel gegen die Oberfläche des Kabels 102 beweglich sind. Der Klemmkörper 104 weist außerdem eine oder mehrere Vertiefungen 112 auf, die im montierten Zustand mit einem oder mehreren entsprechenden radial nach innen vorspringenden Teilen 114 - hervorgehoben durch die gepunktete Ellipse - des Klemmrings 108 eine formschlüssige Verbindung eingehen. Die Vertiefung 112 kann ringförmig umlaufend ausgestaltet sein oder nur in einigen Bereichen des Klemmkörpers 104 ausgebildet sein. In letzterem Fall müssen die nach innen vorspringende Teile 114 des Klemmrings vor der Montage entsprechend ausgerichtet sein. Der Klemmring 108 kann aus einem flexiblen Material bestehen, um bei der Montage über die Klemmfinger oder Klemmzungen 110 geführt werden zu können. Zusätzlich kann der Klemmring 108 in axialer Richtung im Bereich des vorspringenden Teils 114 Einkerbungen oder Schlitze aufweisen (nicht in der Figur gezeigt), welche eine größere Beweglichkeit des bzw. der vorspringenden Teile 114 ermöglichen und dadurch die Montage erleichtern. Das Dichtungsteil 106 ist an einer nach außen weisenden äußeren Oberfläche 116 und an einer zu dem Kabel 102 weisenden inneren Oberfläche 118 mit radial umlaufenden Rillen 120 versehen. Äußere und/oder innere Oberfläche 116, 118 können auch ohne die Rillen 120 ausgeführt sein.

Figur 2 zeigt eine schematische Schnittdarstellung der ersten erfindungsgemäßen exemplarischen Dichtungsanordnung 100 in einer auf dem Kabel 102 fixierten Lage. Der Klemmring 108 ist über die Klemmfinger oder Klemmzungen 110 geschoben und drückt diese gegen die Oberfläche des Kabels 102. Vorspringende Teile der Klemmfinger oder Klemmzungen 110 drücken dabei auf den Mantel des Kabels 102 und bilden mit den dabei entstehenden Vertiefungen im Kabelmantel eine formschlüssige Verbindung. Die vorspringenden Teile 114 des Klemmrings 108 sind in der oder den Vertiefungen 112 des Klemmkörpers 104 gelagert und bilden ebenfalls eine formschlüssige Verbindung (in der Figur in der gepunkteten Ellipse gezeigt). An der rechten Seite der Figur ist ein Ausschnitt einer Gehäusewand 126 mit einer Kabeldurchführung 124 dargestellt, in welcher die Dichtungsanordnung 100 montiert werden soll.

Figur 3 zeigt eine schematische Schnittdarstellung der auf dem Kabel 102 fixierten ersten erfindungsgemäßen exemplarischen Dichtungsanordnung 100 aus Figur 2 nach Montage in einer Kabeldurchführung 124 durch eine Gehäusewand 126. Aus Gründen der besseren Übersichtlichkeit sind die meisten der Bezugszeichen der Dichtungsanordnung 100 weggelassen. Das Dichtungsteil 106 weist eine axiale Länge auf, die im Wesentlichen der Dicke der Gehäusewand 126 entspricht. Das Dichtungsteil 106 ist radial zusammengedrückt, was in der Figur durch die verformten Rillen 120 angedeutet ist. Es ist leicht erkennbar, dass im Dichtungsteil 106 radial nach innen und außen Kräfte in einer Ebene mit der Gehäusewand wirken, die so die Abdichtung der Kabeldurchführung sicherstellen.

Figur 4 zeigt eine schematische Schnittdarstellung der auf dem Kabel 102 fixierten ersten erfindungsgemäßen exemplarischen Dichtungsanordnung 100 aus Figur 2 nach Montage in einer Kabeldurchführung 124 mit geringerer Wanddicke. Auch hier sind aus Gründen der besseren Übersichtlichkeit die meisten der Bezugszeichen der Dichtungsanordnung 100 weggelassen. Es ist in der Figur klar erkennbar, dass der Rand des Dichtungsteils 106 sich nach dem Durchstecken durch die Kabeldurchführung 124 wieder ausgedehnt hat. Dadurch wird eine zusätzliche Sicherung gegen Herausziehen der Dichtungsanordnung 100 erzielt, weil zunächst wieder die Kraft für die Kompression des Dichtungsteils aufgebracht werden muss. Wenn die axiale Länge des Dichtungsteils 106 noch größer ist, können auf beiden Seiten der Kabeldurchführung 124 Teile des Dichtungsteils weitgehend unkomprimiert bleiben und so eine Sicherung gegen Verschieben in beide axiale Richtungen bilden. Die Kabeldurchführung 124 kann auf einer oder beiden Seiten eine Fase aufweisen (nicht in der Figur gezeigt), die das Einführen des Dichtungsteils 106 erleichtern.

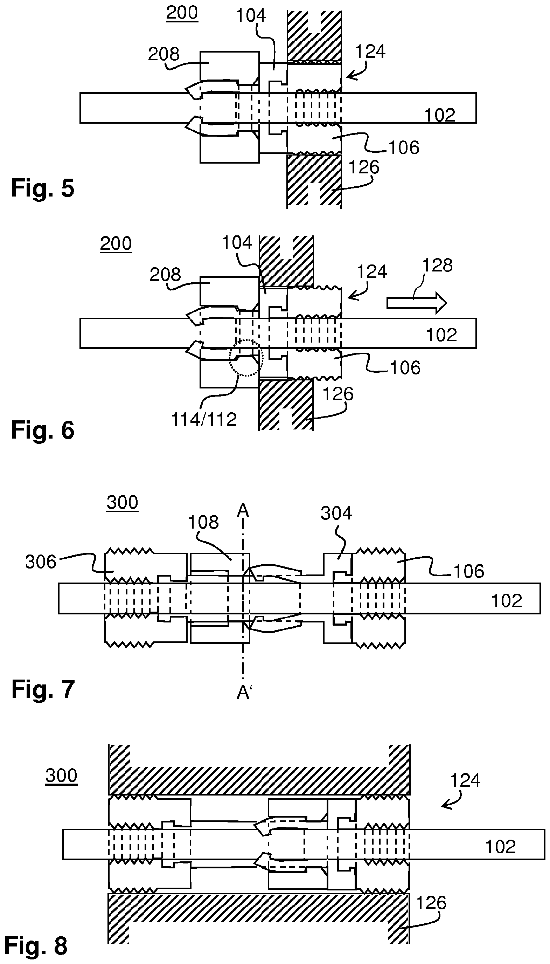

Figur 5 zeigt eine schematische Schnittdarstellung einer auf einem Kabel 102 fixierten zweiten erfindungsgemäßen exemplarischen Dichtungsanordnung 200 nach Montage in einer Kabeldurchführung 124. Auch hier sind aus Gründen der besseren Übersichtlichkeit die meisten der Bezugszeichen der Dichtungsanordnung 200 weggelassen; die Komponenten sind dieselben wie bei der Dichtungsanordnung 100. Bei dieser Ausführung weist der Klemmring 108 einen größeren Durchmesser als die Öffnung der Kabeldurchführung 124 auf, während der Klemmkörper 104 einen Durchmesser aufweist, der gleich groß oder kleiner als die Öffnung der Kabeldurchführung 124 ist. In der Figur liegt das Dichtungsteil 106 zentriert in der Kabeldurchführung 124.

Figur 6 zeigt eine schematische Schnittdarstellung der auf dem Kabel 102 fixierten zweiten erfindungsgemäßen exemplarischen Dichtungsanordnung 200 nach Montage in einer Kabeldurchführung 124 bei Einwirken einer Kraft in eine axiale Richtung. Wie zuvor sind auch hier sind aus Gründen der besseren Übersichtlichkeit die meisten der Bezugszeichen der Dichtungsanordnung 200 weggelassen. Die Kraft und ihre Richtung sind durch den Pfeil 128 angedeutet. Die Dichtungsanordnung 100 ist bereits in Richtung der Kraft aus der in Figur 5 gezeigten Ausgangslage axial verschoben, so dass das Dichtungsteil 106 nicht mehr zentriert in der Kabeldurchführung liegt. Der Klemmring 208 liegt an der Gehäusewand 126 an. Bei Steigerung der Kraft können sich die vorspringenden Teile 114 des Klemmrings 208 aus der Vertiefung 112 des Klemmkörpers 104 lösen und den Klemmkörper 104 und damit das Kabel freigeben, so dass das Kabel und/oder der Klemmkörper der Kraft folgen können. Die für das Lösen des Klemmrings 208 vom Klemmkörper 104 erforderliche Kraft kann in gewissen Grenzen durch eine entsprechende Gestaltung der Rastkanten der Vertiefung 112 und der vorspringenden Teile 114 definiert eingestellt werden. In der Figur ist dies durch schräge Kanten angedeutet (in der Figur in dem gepunkteten Kreis gezeigt).

Figur 7 zeigt eine schematische Schnittdarstellung einer dritten erfindungsgemäßen exemplarischen Dichtungsanordnung 300 in einer nicht auf einem Kabel 102 fixierten Lage. Die rechte Seite des Klemmkörpers 304 entspricht bis zu der strichpunktierten Linie A-A' dem Klemmkörper aus den Figuren 1 bis 5. Klemmring 108 entspricht dem Klemmring aus den Figuren 1 bis 4. Im Unterschied zu den zuvor beschriebenen Dichtungsanordnungen 100, 200 ist ein zweiter Dichtungsteil 306 an einem dem ersten Dichtungsteil 106 gegenüberliegenden Ende des Klemmkörpers 304 vorgesehen, in der Figur auf der linken Seite. Der zweite Dichtungsteil kann auf dieselbe Weise mit dem Klemmkörper 304 verbunden sein. Der Klemmring 108 ist zwischen den beiden Dichtungsteilen 106, 306 verschieblich angeordnet. Seine Elemente und deren Funktionsweise entsprechen den zuvor mit Bezug auf die Figuren 1 bis 6 beschriebenen.

Figur 8 zeigt eine schematische Schnittdarstellung der auf dem Kabel 102 fixierten dritten erfindungsgemäßen exemplarischen Dichtungsanordnung 300 nach Montage in einer Kabeldurchführung 124. Die Fixierung der Dichtungsanordnung 300 auf dem Kabel 102 erfolgt auf die zuvor bereits beschriebene Weise und wird an dieser Stelle nicht erneut beschrieben. Die Wanddicke der Gehäusewand 126 ist gegenüber derjenigen in den zuvor beschriebenen Figuren deutlich größer. Dichtungsanordnung 300 weist eine axiale Länge auf, welche der größeren Wanddicke im Wesentlichen entspricht, so dass die in der Kabeldurchführung 124 platzierte Dichtungsanordnung beidseitig bündig mit der Gehäusewand 136 abschließt. Diese Art Dichtungsanordnung kann verhindern, dass sich Fluide oder Festkörper in einer nur einseitig mit einer Dichtungsanordnung verschlossenen Kabeldurchführung sammeln und dort z.B. Korrosion oder andere unerwünschte Veränderungen von Materialien hervorrufen.

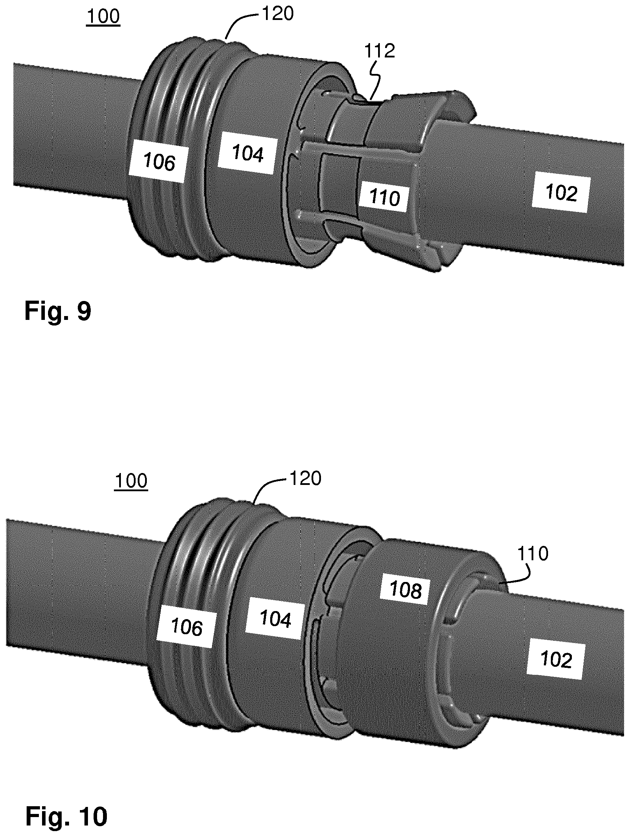

Figur 9 zeigt eine perspektivische Ansicht des Klemmkörpers 104 der ersten erfindungsgemäßen exemplarischen Dichtungsanordnung 100 in einer nicht auf einem Kabel 102 fixierten Lage. Deutlich sind in dieser Ansicht das Dichtungsteil 106 mit Rillen 120 sowie der Klemmkörper 104 mit mehreren Klemmfingern oder Klemmzungen 110 erkennbar. Ebenfalls erkennbar ist die Vertiefung 112, sowie die Schlitze zwischen den Klemmfingern oder Klemmzungen 110.

Figur 10 zeigt eine perspektivische Ansicht der ersten erfindungsgemäßen exemplarischen Dichtungsanordnung 100 in einer auf dem Kabel 102 fixierten Lage. Wie zuvor in Figur 9 sind in dieser Ansicht das Dichtungsteil 106 mit Rillen 120 sowie der Klemmkörper 104 erkennbar. Die Klemmfinger oder Klemmzungen sind durch den Klemmring 108 verdeckt und nur noch teilweise sichtbar.

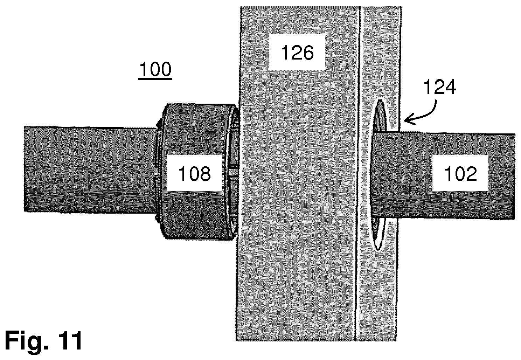

Figur 11 zeigt eine perspektivische Ansicht der ersten erfindungsgemäßen exemplarischen Dichtungsanordnung 100 in einer auf einem Kabel 102 fixierten Lage nach Montage in einer Kabeldurchführung 124 durch eine Gehäusewand 126. Von der Dichtungsanordnung 100 ist im Wesentlichen nur Klemmring 108 sichtbar; der übrige Teil ist entweder durch den Klemmring 108 verdeckt oder innerhalb der Kabeldurchführung 124 angeordnet.

### Bezugszeichenliste

- 100: Dichtungsanordnung
- 102: Kabel
- 104: Klemmkörper
- 105: formschlüssige Verbindung
- 106: Dichtungsteil
- 108: Klemmring
- 110: Klemmfinger / Klemmzunge
- 112: Vertiefung
- 114: vorspringender Teil
- 116: äußere Oberfläche
- 118: innere Oberfläche
- 120: Rillen
- 124: Kabeldurchführung
- 126: Gehäusewand
- 128: Kraft / Kraftrichtung
- 200: Dichtungsanordnung
- 208: Klemmring
- 300: Dichtungsanordnung
- 304: Klemmkörper
- 306: Dichtungsteil

## Patentansprüche

1. Auf ein Kabel (102) aufschiebbare, an dem Kabel (102) axial fixierbare Dichtungsanordnung (100; 200; 300) zur Montage in einer Kabeldurchführung (124) eines Gehäuses, umfassend:
- einen Klemmkörper (104; 304) mit einem daran befestigten Dichtungsteil (106; 306), und
- einen auf den Klemmkörper (104; 304) aufschiebbaren Klemmring (108; 208), welcher den Klemmkörper (104; 304) und dadurch die Dichtungsanordnung (100; 200; 300) auf dem Kabel (102) fixiert,
wobei das Dichtungsteil (106; 306) aus einem elastisch verformbaren ersten Material gefertigt ist, und
wobei der Klemmkörper (104; 304) aus einem zweiten elastisch verformbaren Material gefertigt ist, wobei das zweite Material eine geringere Elastizität als das erste Material aufweist,
**dadurch gekennzeichnet, dass** das Dichtungsteil (106; 306) in axialer Richtung an einem Ende des Klemmkörpers kraft-, form- und/oder stoffschlüssig befestigt ist, und dass das Dichtungsteil (106; 306) einen größeren Durchmesser als die das Dichtungsteil (106; 306) aufnehmende Kabeldurchführung (124) aufweist, so dass das Dichtungsteil (106; 306) im in die Kabeldurchführung (124) des Gehäuses montierten Zustand komprimiert wird und radial gegen das Kabel (102) und gegen die Kabeldurchführung (124) in eine Gehäusewand (126) wirkenden Kräften ausgesetzt ist, welche das Dichtungsteil (106; 306) gleichzeitig gegen das Kabel und die Kabeldurchführung dichtend verformen.

2. Auf ein Kabel (102) aufschiebbare, an dem Kabel (102) axial fixierbare Dichtungsanordnung (100; 200; 300) zur Montage in einer Kabeldurchführung (124) eines Gehäuses nach Anspruch 1, wobei der Klemmkörper (104; 304) entlang eines Umfangs Klemmzungen oder Klemmfinger (110) aufweist, die durch den Klemmring (108; 208) radial aufeinander zu bewegt werden können.

3. Auf ein Kabel (102) aufschiebbare, an dem Kabel (102) axial fixierbare Dichtungsanordnung (100; 200; 300) zur Montage in einer Kabeldurchführung (124) eines Gehäuses nach Anspruch 2, wobei die Klemmfinger oder Klemmzungen (110) auf einer zum Kabel (102) weisenden Seite Strukturen aufweisen, die bei aufgeschobenem Klemmring (108; 208) einen Mantel eines in die Dichtungsanordnung eingeführten Kabels (102) lokal verformen und so eine formschlüssige Verbindung herstellen oder zumindest lokale Kraftspitzen erzeugen, die ein axiales Verschieben der Dichtungsanordnung (100; 200; 300) verhindern oder erschweren.

4. Auf ein Kabel (102) aufschiebbare, an dem Kabel (102) axial fixierbare Dichtungsanordnung (100; 200; 300) zur Montage in einer Kabeldurchführung (124) eines Gehäuses nach einem oder mehreren der vorhergehenden Ansprüche, wobei das Dichtungsteil mit dem Klemmkörper stoffschlüssig, kraftschlüssig oder formschlüssig verbunden ist.

5. Auf ein Kabel (102) aufschiebbare, an dem Kabel (102) axial fixierbare Dichtungsanordnung (100; 200; 300) zur Montage in einer Kabeldurchführung (124) eines Gehäuses nach einem oder mehreren der vorhergehenden Ansprüche, wobei das Dichtungsteil (106; 306) auf einer zum Kabel (102) weisenden Oberfläche (118) und/oder einer zur Kabeldurchführung (124) weisenden Oberfläche (116) jeweils eine oder mehrere entlang eines Umfangs umlaufende Rillen oder Stege (120) aufweist.

6. Auf ein Kabel (102) aufschiebbare, an dem Kabel (102) axial fixierbare Dichtungsanordnung (100; 200) zur Montage in einer Kabeldurchführung (124) eines Gehäuses nach einem oder mehreren der vorhergehenden Ansprüche, wobei das Dichtungsteil (106) eine axiale Länge aufweist, welche größer ist als eine Wanddicke eines Gehäuses, in das das Dichtungsteil (106) eingesetzt ist.

7. Auf ein Kabel (102) aufschiebbare, an dem Kabel (102) axial fixierbare Dichtungsanordnung (100; 200; 300) zur Montage in einer Kabeldurchführung (124) eines Gehäuses nach einem oder mehreren der vorhergehenden Ansprüche, wobei der Klemmring (108; 208) in einer montierten Position mit dem Klemmkörper (104; 304) mittels eines in eine Vertiefung (112) eingreifenden Teils (114) formschlüssig und/oder stoffschlüssig verbunden und gegen Lösen gesichert ist.

8. Auf ein Kabel (102) aufschiebbare, an dem Kabel (102) axial fixierbare Dichtungsanordnung (100; 200; 300) zur Montage in einer Kabeldurchführung (124) eines Gehäuses nach einem oder mehreren der vorhergehenden Ansprüche, wobei der Klemmring (108; 208) in einer montierten Position mit dem Klemmkörper (104; 304) mittels eines in eine Vertiefung (112) eingreifenden Teils (114) formschlüssig verbunden ist, wobei Rastkanten der Vertiefung (112) und des vorspringenden Teils (114) so gestaltet sind, dass der Klemmring (108; 208) unter Aufbringen einer vorbestimmten Mindestkraft lösbar ist.

9. Auf ein Kabel (102) aufschiebbare, an dem Kabel (102) axial fixierbare Dichtungsanordnung (100; 200; 300) zur Montage in einer Kabeldurchführung (124) eines Gehäuses
nach einem oder mehreren der vorhergehenden Ansprüche, wobei der Klemmring (208) einen äußeren Durchmesser aufweist, welcher größer ist als derjenige der Kabeldurchführung (124), und wobei eine axial entgegen der Aufschieberichtung auf den Klemmring (208) wirkende Kraft eine zunehmende Klemmwirkung der Klemmfinger oder Klemmzungen (110) bewirkt und/oder, bei Überschreiten einer vorbestimmten Kraft, ein Lösen des Klemmrings (208) aus einer Montageposition und dadurch eine Verringerung oder ein Verschwinden der Klemmwirkung der Klemmfinger oder Klemmzungen (110) bewirkt.

10. Auf ein Kabel (102) aufschiebbare, an dem Kabel (102) axial fixierbare Dichtungsanordnung (300) zur Montage in einer Kabeldurchführung (124) eines Gehäuses nach einem oder mehreren der vorhergehenden Ansprüche 1 bis 8, wobei an axial gegenüberliegenden Enden des Klemmkörpers (304) jeweils ein Dichtungsteil (106, 306) vorgesehen ist, und wobei mindestens ein Klemmring (108) zwischen den Dichtungsteilen (106, 306) verschieblich gelagert ist.

11. Kabel (102) mit einer Dichtungsanordnung (100; 200; 300) zur Montage in einer Kabeldurchführung (124) eines Gehäuses nach einem oder mehreren der vorhergehenden Ansprüche, wobei die Dichtungsanordnung (100; 200; 300) auf dem Kabel (102) fixiert ist.

12. Elektrische Einrichtung mit einem Gehäuse, wobei wenigstens ein Kabel (102) nach Anspruch 11 durch eine Kabeldurchführung des Gehäuses in dessen Inneres geführt ist.

13. Verfahren zur Abdichtung einer Kabeldurchführung (124) eines Gehäuses, umfassend:
- Aufschieben und Fixieren einer Dichtungsanordnung (100; 200; 300) nach einem oder mehreren der Ansprüche 1 bis 10 auf einem in das Gehäuse einzuführenden Kabel (102), und
- Einführen des Kabels (102) und der Dichtungsanordnung (100; 200; 300) in die Kabeldurchführung (124) des Gehäuses, wobei mindestens ein Dichtungsteil (106; 306) der Dichtungsanordnung (100; 200; 300) komprimiert wird und radial umlaufend gegen die Oberfläche eines Kabelmantels sowie die Oberfläche der Kabeldurchführung (124) gepresst wird.

## Claims

1. A sealing arrangement (100; 200; 300), which can be pushed onto a cable (102) and is fixable on the cable (102) for mounting in a cable feedthrough (124) of a housing, comprising:
- a clamping body (104; 304) having a sealing part (106; 306) fastened thereto, and
- a clamping ring (108; 208), which can be pushed onto the cable body (104; 304), which clamping ring fixes the clamping body (104; 304) and thus the sealing arrangement (100; 200; 300) on the cable (102),
wherein the sealing part (106; 306) is made from an elastically deformable first material, and
wherein the clamping body (104; 304) is made from a second elastically deformable material, wherein the second material has a lower elasticity than the first material,
**characterized in that** the sealing part (106; 306) is fastened in a force-locking, form-locking and/or material-locking manner in the axial direction to an end of the clamping body, and that the sealing part (106; 306) has a larger diameter than the cable feedthrough (124) accommodating the sealing part (106; 306), so that the sealing part (106; 306) is compressed in the mounted state into the cable feedthrough (124) of the housing and is exposed to forces acting radially against the cable (102) and against the cable feedthrough (124) into a housing wall (126), which forces deform the sealing part (106; 306) in a sealing manner simultaneously against the cable and the cable feedthrough.

2. The sealing arrangement (100; 200; 300), which can be pushed onto a cable (102) and is fixable on the cable (102) for mounting in a cable feedthrough (124) of a housing according to claim 1, wherein the clamping body (104, 304) has clamping tongues or clamping fingers (110), which can be moved by the clamping ring (108; 208) radially towards each other.

3. The sealing arrangement (100; 200; 300), which can be pushed onto a cable (102) and is fixable on the cable (102) for mounting in a cable feedthrough (124) of a housing according to claim 2, wherein the clamping fingers or clamping tongues (110) have structures on a side facing the cable (102), which when the clamping ring (108, 208) is pushed on locally deform a jacket of a cable (102) introduced into the sealing arrangement and thus produce a form-locking connection or generate at least local force peaks, which prevent or make an axial displacement of the sealing arrangement (100; 200; 300) more difficult and thus produce a form-locking connection or generate at least local force peaks, which prevent or make an axial displacement of the sealing arrangement (100; 200; 300) more difficult.

4. The sealing arrangement (100; 200; 300), which can be pushed onto a cable (102) and is fixable on the cable (102) for mounting in a cable feedthrough (124) of a housing according to any one or several of the preceding claims, wherein the sealing part is connected in a material-locking, force-locking or form-locking manner.

5. The sealing arrangement (100; 200; 300), which can be pushed onto a cable (102) and is fixable on the cable (102) for mounting in a cable feedthrough (124) of a housing according to any one or several of the preceding claims, wherein the sealing part (106; 306) in each case has one or more grooves or ridges (120) running along a circumference on a surface (118) facing the cable (102) and/or a surface (116) facing the cable feedthrough (124).

6. The sealing arrangement (100; 200; 300), which can be pushed onto a cable (102) and is fixable on the cable (102) for mounting in a cable feedthrough (124) of a housing according to any one or several of the preceding claims, wherein the sealing part (106) has an axial length, which is greater than the wall thickness of the housing, into which the sealing part (106) is inserted.

7. The sealing arrangement (100; 200; 300), which can be pushed onto a cable (102) and is fixable on the cable (102) for mounting in a cable feedthrough (124) of a housing according to any one or several of the preceding claims, wherein clamping ring (108; 208) is connected in a form-locking and/or material-locking manner in a mounted position to the clamping body (104; 304) by means of a part (114) engaging in a recess (112) and is secured against release.

8. The sealing arrangement (100; 200; 300), which can be pushed onto a cable (102) and is fixable on the cable (102) for mounting in a cable feedthrough (124) of a housing according to any one or several of the preceding claims, wherein the clamping ring (108; 208) is connected in a form-locking manner in a mounted position to the clamping body (104; 304) by means of a part (114) engaging in a recess (112), wherein the latching edges of the recess (112) and of the projecting part (114) are designed so that the clamping ring (108; 208) is releasable when applying a predetermined minimum force.

9. The sealing arrangement (100; 200; 300), which can be pushed onto a cable (102) and is fixable on the cable (102) for mounting in a cable feedthrough (124) of a housing according to any one or several of the preceding claims, wherein the clamping ring (208) has an outer diameter, which is larger than that of the cable feedthrough (124), and wherein a force acting axially against the pushing-on direction on the clamping ring (208) brings about an increasing clamping effect of the clamping fingers or clamping tongues (110) and/or, when a predetermined force is exceeded brings about a release of the clamping ring (208) from a mounting position and thus a reduction or a disappearance of the clamping effect of the clamping fingers or clamping tongues (110).

10. The sealing arrangement (300), which can be pushed onto a cable (102) and is fixable on the cable (102) for mounting in a cable feedthrough (124) of a housing according to any one or several of the preceding claims 1 to 8, wherein in each case a sealing part (106, 306) is provided on axially opposite ends of the clamping body (304) and wherein at least one clamping ring (108) is displaceably mounted between the sealing parts (106, 306).

11. A cable (102) having a sealing arrangement (100; 200; 300) for mounting in a cable feedthrough (124) of a housing according to any one or several of the preceding claims, wherein the sealing arrangement (100; 200; 300) is fixed on the cable (102).

12. An electrical device having a housing, wherein at least one cable (102) is guided according to claim 11 through a cable feedthrough of the housing into its interior.

13. A method for sealing a cable feedthrough (124) of a housing, comprising:
- pushing on and fixing a sealing arrangement (100; 200; 300) according to any one or several of claims 1 to 10 on a cable (102) to be introduced into the housing and
- introducing the cable (102) and the sealing arrangement (100; 200; 300) into the cable feedthrough (124) of the housing, wherein at least one sealing part (106; 306) of the sealing arrangement (100; 200; 300) is compressed and is pressed radially circumferentially against the surface of a cable jacket and the surface of the cable feedthrough (124).

## Revendications

1. Dispositif d'étanchéité (100 ; 200 ; 300) pouvant être enfilé sur un câble (102) et pouvant être fixé axialement au câble (102), destiné à être monté dans un passage de câble (124) d'un boîtier, comprenant :
- un corps de serrage (104 ; 304) avec une pièce d'étanchéité (106 ; 306) fixée à celui-ci et
- une bague de serrage (108 ; 208) pouvant être enfilée sur le corps de serrage (104 ; 304), qui fixe le corps de serrage (104 ; 304) et donc le dispositif d'étanchéité (100 ; 200 ; 300) sur le câble (102),
dans lequel la pièce d'étanchéité (106 ; 306) est constituée d'un premier matériau déformable élastiquement et
dans lequel le corps de serrage (104 ; 304) est constitué d'un deuxième matériau déformable élastiquement, dans lequel le deuxième matériau présente une élasticité plus faible que le premier matériau,
**caractérisé en ce que** la pièce d'étanchéité (106 ; 306) est fixée par force, par complémentarité de forme et/ou par liaison de matière dans la direction axiale à une extrémité du corps de serrage et **en ce que** la pièce d'étanchéité (106 ; 306) présente un diamètre plus grand que le passage de câble (124) logeant la pièce d'étanchéité (106 ; 306), de sorte que la pièce d'étanchéité (106 ; 306) est comprimée dans l'état monté dans le passage de câble (124) du boîtier et est exposée aux forces agissant radialement contre le câble (102) et contre le passage de câble (124) dans une paroi du boîtier (126), qui déforment de manière étanche la pièce d'étanchéité (106 ; 306) simultanément contre le câble et contre le passage de câble.

2. Dispositif d'étanchéité (100 ; 200 ; 300) pouvant être enfilé sur un câble (102) et pouvant être fixé axialement au câble (102), destiné à être monté dans un passage de câble (124) d'un boîtier selon la revendication 1, dans lequel le corps de serrage (104 ; 304) comprend, le long d'une circonférence, des languettes de serrage ou des doigts de serrage (110) qui peuvent être déplacés radialement les uns vers les autres par la bague de serrage (108 ; 208).

3. Dispositif d'étanchéité (100 ; 200 ; 300) pouvant être enfilé sur un câble (102) et pouvant être fixé axialement au câble (102), destiné à être monté dans un passage de câble (124) d'un boîtier selon la revendication 2, dans lequel les doigts de serrage ou les languettes de serrage (110) présentent, sur un côté orienté vers le câble (102), des structures qui, lorsque la bague de serrage (108 ; 208) est enfilée, déforment localement une enveloppe d'un câble (102) introduit dans le dispositif d'étanchéité et établissent ainsi une liaison par complémentarité de forme et génèrent au moins des pointes de force locales qui empêchent ou rendent difficile un déplacement axial du dispositif d'étanchéité (100 ; 200 ; 300).

4. Dispositif d'étanchéité (100 ; 200 ; 300) pouvant être enfilé sur un câble (102) et pouvant être fixé axialement au câble (102), destiné à être monté dans un passage de câble (124) d'un boîtier selon l'une ou plusieurs des revendications précédentes, dans lequel la pièce d'étanchéité est reliée par liaison de matière, par force ou par complémentarité de forme avec le corps de serrage.

5. Dispositif d'étanchéité (100 ; 200 ; 300) pouvant être enfilé sur un câble (102) et pouvant être fixé axialement au câble (102), destiné à être monté dans un passage de câble (124) d'un boîtier selon l'une ou plusieurs des revendications précédentes, dans lequel la pièce d'étanchéité (106 ; 306) comprend, sur une surface (118) orientée vers le câble (102) et/ou une surface (116) orientée vers le passage de câble (124) respectivement une ou plusieurs rainures ou nervures (120) réalisées le long d'une circonférence.

6. Dispositif d'étanchéité (100 ; 200) pouvant être enfilé sur un câble (102) et pouvant être fixé axialement au câble (102), destiné à être monté dans un passage de câble (124) d'un boîtier selon l'une ou plusieurs des revendications précédentes, dans lequel la pièce d'étanchéité (106) présente une longueur axiale qui est plus grande qu'une épaisseur de paroi d'un boîtier dans lequel la pièce d'étanchéité (106) est insérée.

7. Dispositif d'étanchéité (100 ; 200 ; 300) pouvant être enfilé sur un câble (102) et pouvant être fixé axialement au câble (102), destiné à être monté dans un passage de câble (124) d'un boîtier selon l'une ou plusieurs des revendications précédentes, dans lequel la bague de serrage (108 ; 208), dans une position montée, est reliée par complémentarité de forme et/ou liaison de matière et sécurisée contre un détachement avec le corps de serrage (104 ; 304) au moyen d'une pièce (114) s'emboîtant dans une cavité (112).

8. Dispositif d'étanchéité (100 ; 200 ; 300) pouvant être enfilé sur un câble (102) et pouvant être fixé axialement au câble (102), destiné à être monté dans un passage de câble (124) d'un boîtier selon l'une ou plusieurs des revendications précédentes, dans lequel la bague de serrage (108 ; 208), dans une position montée, est reliée par complémentarité de forme avec le corps de serrage (104 ; 304) au moyen d'une pièce (114) s'emboîtant dans une cavité (112), dans lequel des arêtes d'encliquetage de la cavité (112) et de la pièce (114) en saillie sont conçues de sorte que la bague de serrage (108 ; 208) peut être détachée en appliquant une force minimale prédéterminée.

9. Dispositif d'étanchéité (100 ; 200 ; 300) pouvant être enfilé sur un câble (102) et pouvant être fixé axialement au câble (102), destiné à être monté dans un passage de câble (124) d'un boîtier selon l'une ou plusieurs des revendications précédentes, dans lequel la bague de serrage (208) présente un diamètre extérieur qui est supérieur à celui du passage de câble (124) et dans lequel une force agissant axialement à l'encontre de la direction d'enfilage sur la bague de serrage (208) provoque un effet de serrage des doigts de serrage ou des languettes de serrage (110) et/ou, lors d'un dépassement d'une force prédéterminée, provoque un détachement de la bague de serrage (208) hors d'une position de montage et donc une diminution ou une disparition de l'effet de serrage des doigts de serrage ou des languettes de serrage (110).

10. Dispositif d'étanchéité (300) pouvant être enfilé sur un câble (102) et pouvant être fixé axialement au câble (102), destiné à être monté dans un passage de câble (124) d'un boîtier selon l'une ou plusieurs des revendications précédentes 1 à 8, dans lequel, à chacune des extrémités opposées du corps de serrage (304) est prévue une pièce d'étanchéité (106, 306) et dans lequel au moins une bague de serrage (108) est logée de manière coulissante entre les pièces d'étanchéité (106, 306).

11. Câble (102) avec un dispositif d'étanchéité (100 ; 200 ; 300) destiné à être monté dans un passage de câble (124) d'un boîtier selon l'une ou plusieurs des revendications précédentes, dans lequel le dispositif d'étanchéité (100 ; 200 ; 300) est fixé sur le câble (102).

12. Dispositif électrique avec un boîtier, dans lequel au moins un câble (102) selon la revendication 11 est guidé à travers un passage de câble du boîtier vers l'intérieur de celui-ci.

13. Procédé d'étanchéification d'un passage de câble (124) d'un boîtier, comprenant :
- l'enfilage et la fixation d'un dispositif d'étanchéité (100 ; 200 ; 300) selon l'une ou plusieurs des revendications 1 à 10 sur un câble (102) à introduire dans le boîtier et
- l'introduction du câble (102) et du dispositif d'étanchéité (100 ; 200 ; 300) dans le passage de câble (124) du boîtier, dans lequel au moins une pièce d'étanchéité (106 ; 306) du dispositif d'étanchéité (100 ; 200 ; 300) est comprimée et est pressée radialement de manière circonférentielle contre la surface d'une enveloppe de câble ainsi que contre la surface du passage de câble (124).
